Europäisches Patentamt

European Patent Office

Office européen des brevets

(11) Numéro de publication : **0 371 864 B1**

## FASCICULE DE BREVET EUROPEEN

(45) Date de publication du fascicule du brevet :
**15.04.92 Bulletin 92/16**

(21) Numéro de dépôt : **89403273.9**

(22) Date de dépôt : **27.11.89**

(51) Int. Cl.⁵ : **A63B 37/14**

(54) **Balle de golf.**

(30) Priorité : **29.11.88 FR 8815569**

(43) Date de publication de la demande :
**06.06.90 Bulletin 90/23**

(45) Mention de la délivrance du brevet :
**15.04.92 Bulletin 92/16**

(84) Etats contractants désignés :
**DE FR GB**

(56) Documents cités :
**EP-A- 0 159 550**
**GB-A- 189 551**
**US-A- 4 772 026**

(73) Titulaire : **Salomon S.A.**
**Metz-Tessy**
**F-74011 Annecy (FR)**

(72) Inventeur : **Morell, Joseph**
**3, allée des Treilles**
**F-74490 Annecy-le-vieux (FR)**

(74) Mandataire : **Martin, Jean-Jacques et al**
**Cabinet REGIMBEAU 26, Avenue Kléber**
**F-75116 Paris (FR)**

EP 0 371 864 B1

Jouve, 18, rue Saint-Denis, 75001 PARIS

**Description**

La présente invention concerne une balle de golf, du type présentant une face périphérique ayant la forme générale d'une sphère et une pluralité de creux aménagés dans ladite face périphérique et définissant par leurs intersections avec celle-ci des cercles d'intersection répartis sur ladite face périphérique selon un motif répétitif déterminé par une subdivision de ladite face périphérique suivant 6 cercles équatoriaux dont chacun est axé sur un axe passant par les milieux respectifs de deux arêtes diamétralement opposées d'un cube inscrit dans la sphère, de façon à définir 24 surfaces élémentaires identiques en forme de triangle rectangle isocèle sphérique, à l'intérieur desquelles lesdits cercles d'intersection sont répartis pour l'essentiel, au moins un cercle équatorial déterminé, parmi lesdits cercles équatoriaux, ne coupant aucun cercle d'intersection et subdivisant chacun des autres desdits cercles équatoriaux en deux arcs de cercle équatorial, dont chacun correspond à l'un des deux hémisphères définis par ledit cercle équatorial déterminé, lesdits arcs de cercles équatoriaux se coupant mutuellement par deux ou trois en des points d'intersection déterminés sur chaque hémisphère.

Une balle de golf de ce type est décrite dans le brevet américain N° 4 772 026 qui, en référence à ses figures 2 à 7 et 9 à 14, propose un certain nombre de motifs de répartition des cercles d'intersection à l'intérieur des surfaces élémentaires en forme de triangle rectangle isocèle sphérique.

On remarque que, de façon générale, ces motifs connus laissent subsister localement, de la face périphérique sphérique de la balle de golf, des plages relativement importantes, démunies de creux, si bien que l'utilisateur est contraint d'orienter soigneusement sa balle avant de la frapper s'il veut bénéficier d'une probabilité importante d'atteindre la face périphérique de la balle dans des zones de cette face présentant une géométrie à peu près identique à chaque coup, afin d'assurer la reproductibilité des coups.

Le but de la présente invention est de remédier à cet inconvénient en proposant un mode de répartition des creux d'intersection sur la face périphérique de la balle de golf permettant de réduire dans toute la mesure du possible les plages de cette face périphérique subsistant entre les cercles d'intersection.

A cet effet, la présente invention propose une balle de golf du type indiqué en préambule, en outre caractérisée en ce qu'au moins un cercle d'intersection est disposé autour de l'un, respectif, desdits points d'intersection de trois arcs de cercles équatoriaux.

De préférence, un cercle d'intersection est ainsi disposé respectivement autour de chacun des points d'intersection de trois arcs de cercles équatoriaux, ce qui, allié à un choix judicieux du motif de répartition des cercles d'intersection à l'intérieur de chaque surface élémentaire, permet d'obtenir une couverture aussi complète que possible de la face périphérique de la balle de golf par les cercles d'intersection, c'est-à-dire par les creux ; ainsi, l'utilisateur soucieux de frapper toujours la balle dans des zones présentant une géométrie sensiblement identique conserve pour seul souci, avant chaque coup, de vérifier que l'orientation de la balle n'est pas telle que ce coup atteigne la face périphérique de celle-ci au niveau dudit cercle équatorial déterminé, seul hypothèse entraînant la nécessité de réorienter la balle.

Naturellement, seuls certains des points d'intersection de trois arcs de cercles équatoriaux peuvent présenter un creux, c'est-à-dire un cercle d'intersection d'un tel creux avec la face périphérique de la balle de golf, l'un d'entre eux ou plusieurs d'entre eux pouvant conserver la forme d'une plage intermédiaire entre des cercles d'intersection disposés à l'intérieur de surfaces élémentaires respectives comme le propose le brevet américain précité ou présenter la forme d'un méplat, pour recevoir par exemple un marquage du fabricant ; certes, un tel choix va à l'encontre du but recherché conformément à la présente invention en ce qu'il peut obliger l'utilisateur à réorienter plus souvent sa balle que lorsque chaque point d'intersection de trois arcs de cercles équatoriaux présente un cercle d'intersection, mais cet inconvénient reste limité dans la mesure où le nombre de points d'intersection de trois arcs de cercles équatoriaux ainsi démunis de cercles d'intersection reste lui-même limité.

On remarquera que la mise en oeuvre de la présente invention n'entraîne pas de difficulté dans la fabrication de la balle, en raison du fait que l'un des cercles équatoriaux précités, à savoir ledit cercle équatorial déterminé, ne coupe aucun cercle d'intersection d'un creux avec la face périphérique de la balle de golf. Ce cercle équatorial déterminé peut en effet correspondre à un plan de joint lorsque la balle est réalisée par assemblage de deux moitiés identiques ou lorsqu'au moins une couche superficielle de celle-ci, comprenant les creux, est réalisée par moulage en une seule pièce dans un moule lui-même formé de deux moitiés identiques assemblées, ce qui correspond à des procédés de fabrication connus, dont la simplicité et l'économie de mise en oeuvre sont également connues.

Pour pallier l'absence de cercle d'intersection sur ce cercle équatorial déterminé, c'est-à-dire pour réduire en dépit de cette absence les plages de la face périphérique sphérique subsistant à ce niveau entre les cercles d'intersection, on peut prévoir que les arcs de cercle équatorial de l'un des hémisphères soient décalés angulairement, par rapport aux arcs de cercle équatorial respectivement correspondants de l'autre des hémisphères, d'une même valeur autour de l'axe dudit cercle équatorial déterminé ; naturellement, cette notion de décalage angulaire s'entend par référence à la construction géométrique de la subdivision de la face périphérique de la balle en surfaces élémentaires.

De préférence, ceux des cercles d'intersection qui ne sont pas situés à l'intersection de trois arcs de cercles équatoriaux sont répartis selon un motif identique dans les surfaces élémentaires, ledit motif étant de préférence choisi de façon à assurer une répartition aussi homogène que possible des plages de faces périphériques de la balle de golf subsistant entre les cercles d'intersection.

A cet effet, on peut choisir un motif inspiré du motif illustré à la figure 9 du brevet américain précité, lequel motif comporte plusieurs rangées mutuellement voisines dont une première est adjacente à l'hypothénuse du triangle rectangle sphérique et dont chacune relie mutuellement les deux côtés de l'angle droit du triangle rectangle sphérique et présente un nombre respectif déterminé de cercles d'intersection de même diamètre régulièrement répartis, ce nombre déterminé étant pour chaque rangée inférieur d'une unité au nombre déterminé de cercles d'intersection dans la rangée respectivement voisine plus proche de l'hypothénuse et chaque cercle d'intersection de chaque rangée étant adjacent à deux cercles d'intersection de ladite rangée respectivement voisine plus proche de l'hypothénuse. Toutefois, au lieu de donner un même diamètre à tous les cercles d'intersection ainsi disposés dans une même surface élémentaire, comme l'enseigne en référence à sa figure 9 le brevet américain précité, on préfère conformément à la présente invention que les cercles d'intersection respectifs desdites rangées présentent un diamètre d'autant plus réduit que la rangée à laquelle ils appartiennent est plus éloignée de l'hypothénuse du triangle rectangle sphérique, disposition que l'on allie de préférence à une disposition quant à elle connue du brevet américain précité, selon laquelle chaque rangée présente deux cercles d'intersection extrêmes adjacents respectivement à l'un et l'autre des côtés de l'angle droit du triangle rectangle sphérique, lesdits cercles d'intersection extrêmes correspondant à un même côté de l'angle droit du triangle rectangle sphérique étant en outre mutuellement adjacents.

Ainsi, selon un mode de mise en oeuvre préféré de la présente invention, ladite première rangée comporte cinq cercles d'intersection mutuellement adjacents, adjacents à l'hypothénuse du triangle rectangle sphérique et dont deux cercles d'intersection extrêmes sont en outre adjacents respectivement à l'un et l'autre des côtés de l'angle droit du triangle rectangle sphérique, et lesdites rangées comportent en outre :

– une deuxième rangée de quatre cercles d'intersection mutuellement disjoints, dont chacun est adjacent à deux cercles d'intersection de la première rangée et dont deux cercles d'intersection extrêmes sont en outre adjacents respectivement à l'un et l'autre des côtés de l'angle droit du triangle rectangle sphérique,

– une troisième rangée de trois cercles d'intersection mutuellement disjoints, dont chacun est adjacent à deux cercles d'intersection de la deuxième rangée et dont deux cercles d'intersection extrêmes sont en outre adjacents respectivement à l'un et l'autre des côtés de l'angle droit du triangle rectangle sphérique,

– une quatrième rangée de deux cercles d'intersection mutuellement disjoints, dont chacun est adjacent à deux cercles d'intersection de la troisième rangée et respectivement à l'un et l'autre des côtés de l'angle droit du triangle rectangle sphérique,

– un cercle d'intersection unique adjacent aux deux cercles d'intersection de la quatrième rangée et aux deux côtés de l'angle droit.

On conçoit aisément qu'ainsi, les plages de face périphérique de la balle de golf subsistant entre deux cercles d'intersection, à l'intérieur de chaque surface élémentaire comme d'une surface élémentaire à l'autre, puissent être réduites à un minimum ; à cet effet également, on donne de préférence au cercle d'intersection situé autour de l'un, respectif, desdits points d'intersection de trois arcs de cercles équatoriaux un diamètre tel qu'il soit adjacent à six cercles d'intersection dont chacun est situé dans l'une, respective, desdites surfaces élémentaires et constitue dans cette surface élémentaire l'un desdits cercles d'intersection extrêmes de ladite première rangée respective.

D'autres caractéristiques et avantages d'une balle conforme a la présente invention ressortiront de la description ci-dessous, relative à un exemple non limitatif de mise en oeuvre, ainsi que des dessins annexés qui font partie intégrante de cette description.

– La figure 1 illustre la construction de six cercles équatoriaux sur une sphère à partir d'un cube inscrit dans cette dernière.

– La figure 2 montre une balle de golf dont les creux, ou plus précisément les cercles d'intersection de ces creux avec la face périphérique de la balle, sont répartis conformément à la présente invention.

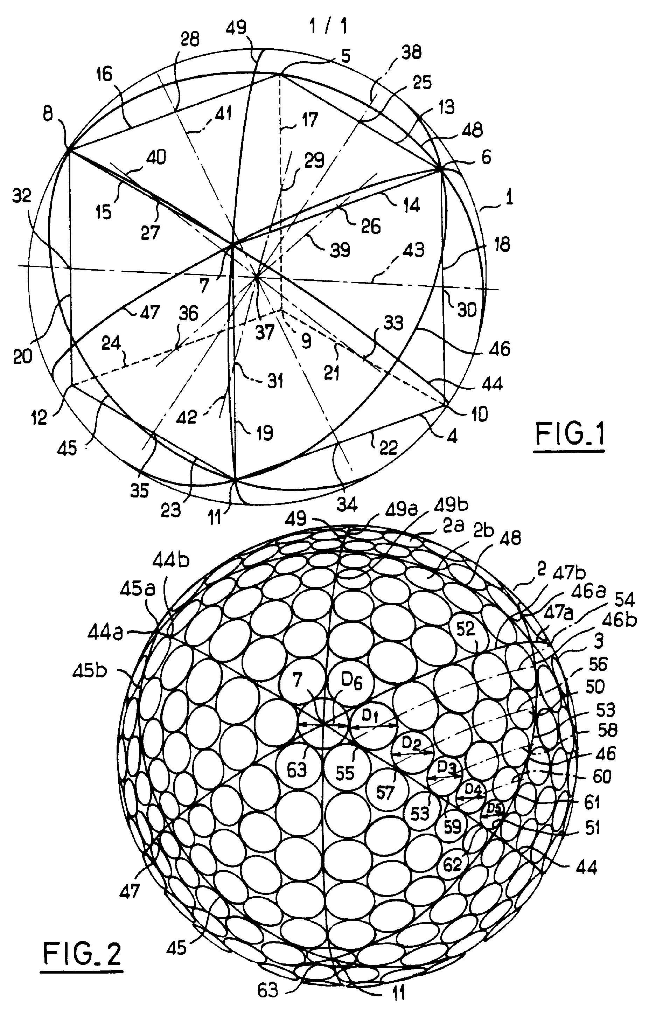

On se réfèrera en premier lieu à la figure 1 où l'on a désigné par 1 une sphère matérialisant la forme générale de la face périphérique 2 d'une balle de golf 3, illustrée à la figure 2, et par 4 un cube inscrit dans cette sphère 1 sur laquelle il présente 8 sommets 5 à 12 raccordés deux à deux par 12 arêtes 13 à 24 dont chacune présente un milieu 25 à 36 ; le cube 4 et la sphère 1 présentent un centre commun 37 qui servira de référence lorsqu'on fera appel, par la suite, à la notion de positions diamétralement opposées.

Pour des raisons géométriques, les arêtes 13 à 24 du cube 4 se répartissent en 6 groupes de deux arêtes diamétralement opposées, mutuellement parallèles, à savoir les arêtes 13 et 23, 14 et 24, 15 et 21, 16 et 22, 17 et 19, 18 et 20 dont les milieux respectifs occupent également des positions diamétralement opposées ; pour mettre en oeuvre la présente invention, par les milieux respectifs de deux arêtes ainsi diamétralement opposées, on détermine un axe, à savoir l'axe 38 passant par les milieux 25 et 35, l'axe 39 passant par les milieux 26 et 36, l'axe 40 passant par les milieux 27 et 33, l'axe 41 passant par les milieux 28 et 34, l'axe 42 passant par les milieux 29 et 31, et l'axe 43 passant par les milieux 30 et 32 ; autour des 6 axes ainsi déterminés, dans un plan (non référencé) coupant perpendiculairement cet axe au centre 37 du cube 4 et de la sphère 1, on trace sur cette sphère 1 un cercle équatorial passant par 4 sommets du cube, à savoir le cercle 44 d'axe 38, passant par les sommets 7, 8, 9, 10, le cercle 45 d'axe 39, passant par les sommets 5, 10, 11, 8, le cercle 46 d'axe 40, passant par les sommets 5, 6, 11, 12, le cercle 47 d'axe 41, passant par les sommets 6, 7, 12, 9, le cercle 48 d'axe 42 passant par les sommets 6, 10, 12, 8 et le cercle 49 d'axe 43, passant par les sommets 5, 9, 11, 7 ; ces six cercles 44 à 49 ont également été figurés sur la face périphérique 2 de la balle 3 à la figure 2, mais on remarquera qu'il n'est pas nécessaire que ces cercles soient matérialisés sur cette face 2.

On remarquera que, pour des raisons géométriques, chacun des 6 cercles équatoriaux 44 à 49 définit par son plan (non référencé) un plan de symétrie pour les autres de ces cercles équatoriaux.

Comme le montre la figures 2, ces six cercles équatoriaux définissent 24 surfaces élémentaires identiques 50 en forme de triangle rectangle isocèle sphérique, mutuellement symétriques par rapport aux 6 cercles équatoriaux 44 à 49 et dont on a désigné l'angle droit par 51, l'hypothénuse par 52, et les deux côtés de l'angle droit par 53 ; on remarquera que l'hypothénuse 52 et les deux côtés 53 de l'angle droit 51 d'une surface élémentaire 50 sont communs à une surface élémentaire voisine respective.

De façon connue en soi, dans la face périphérique, sphérique 2 de la balle 3 sont aménagés des creux qui présentent par exemple la forme de calottes sphériques et définissent des cercles par leur intersection avec cette face périphérique 2.

Dans leur majorité, les cercles d'intersection ainsi définis sont répartis suivant des motifs déterminés à l'intérieur des surfaces élémentaires 50, sans chevauchement d'aucun des cercles équatoriaux dans l'exemple illustré bien qu'un tel chevauchement soit admissible dans une certaine mesure ; de préférence, toutefois, en vue de la mise en oeuvre de la présente invention, l'un au moins de ces cercles équatoriaux, à savoir le cercle 48, ne coupe aucun des cercles d'intersection des creux avec la face périphérique 2 de la balle 3, pour correspondre à un plan de joint entre deux moitiés de la balle si celle-ci est réalisée en deux moitiés, ou entre deux moitiés d'un moule destiné à la réalisation de la balle, ou au moins d'une couche superficielle de celle-ci comprenant les creux, en une seule pièce par moulage ; de préférence, et bien que l'on ne sorte pas du cadre de la présente invention en adoptant une disposition différente, le motif de répartition des creux, c'est-à-dire des cercles d'intersection de ces derniers avec la face périphérique de la balle, est identique d'une surface élémentaire 50 à l'autre ; précisément, le mode de mise en oeuvre de l'invention illustré à la figure 2 reprend cette disposition préférée, d'une façon qui va être décrite à présent plus en détail.

Dans chaque surface élémentaire 50, les cercles d'intersection des creux avec la face périphérique 2, sphérique, de la balle 3 se répartissent de la façon suivante :

– une première rangée 54 de cinq cercles d'intersection 55 mutuellement identiques, c'est-à-dire d'un même diamètre $D_1$ choisi de telle sorte que ces cinq cercles soient adjacents deux à deux et adjacents à l'hypothénuse 52 de la surface élémentaire 50, et de telle sorte que chacun des cercles 55 d'extrémité de cette rangée 54 soit en outre adjacent à l'un, respectif, des deux côtés 53 de l'angle droit 51 ;

– une deuxième rangée 56 comportant quatre cercles 57 identiques, c'est-à-dire de même diamètre $D_2$ inférieur au diamètre $D_1$ et choisi, de façon aisément déterminable par un Homme du métier, de telle sorte que les cercles 57 soient mutuellement disjoints mais soient adjacents à deux, respectifs, des cercles 55 de la première rangée 54, située entre la rangée 56 et l'hypothénuse 52 de la surface élémentaire, et que chacun des cercles 57 extrêmes de la rangée 56 soit en outre adjacent à l'un, respectif, des deux côtés 53 de l'angle droit 51 ;

– une troisième rangée 58 comportant trois cercles 59 de même diamètre $D_3$ inférieur au diamètre $D_2$ et choisi, de façon aisément déterminable par un Homme du métier, de telle sorte que les cercles 59 soient mutuellement disjoints mais soient adjacents à deux, respectifs, des cercles 57 de la deuxième rangée 56, située entre la rangée 58 et l'hypothénuse 52 de la surface élémentaire 50, et que chacun des cercles 59 extrêmes de la rangée 56 soit en outre adjacent à l'un, respectif, des deux côtés 53 de l'angle droit 51 ;

– une quatrième rangée 60 de deux cercles 61 de même diamètre $D_4$ inférieur au diamètre $D_3$ des cercles 59 de la troisième rangée 58, lequel diamètre $D_4$ est choisi de telle sorte que les deux cercles de la rangée 60 soient mutuellement disjoints mais soient adjacents à deux, respectifs, des cercles 59 de la troisième rangée 58 plus proche de l'hypothénuse 52 et que chacun des cercles 61 soit adjacent à l'un, respectif, des côtés 53 de l'angle droit 51 ;

– un cercle d'intersection unique 62 de diamètre $D_5$ inférieur à celui des cercles 61 et choisi tel que ce cercle 62 soit adjacent à la fois aux deux cercles 61 de la quatrième rangée 60 et aux deux côtés 53 de l'angle droit 51.

Les diamètres $D_1$, $D_2$, $D_3$, $D_4$, $D_5$ peuvent être aisément déterminés à l'effet des positions précédemment décrites des cercles 55, 57, 59, 61, 62, par un Homme du métier.

De façon générale, dans ce qui précède comme dans ce qui suit, on entend par caractère "adjacent", à propos des cercles d'intersection d'un creux avec la face périphérique 2 de la balle 3, soit deux à deux, soit vis-a-vis d'un côté délimitant la surface élémentaire qui les contient pour l'essentiel, une relation tangentielle ou un écartement mutuel tel qu'il soit faible en regard du diamètre des cercles concernés, et par exemple au plus égal au quart de ce diamètre, ce chiffre étant indiqué à titre d'exemple non limitatif.

En outre, conformément à la présente invention, des creux matérialisés par des cercles 63 d'intersection avec la face périphérique 2 de la balle 3 sont aménagés respectivement autour de certaines des intersections mutuelles des cercles équatoriaux 44, 45, 46, 47, 49, les intersections de ces derniers avec le cercle équatorial 48 restant par contre démunies de creux.

Plus précisément, si l'on désigne respectivement par 2a et 2b deux hémisphères définis, sur la face périphérique 2 de la balle 3, par le cercle équatorial 48, ce cercle 48 subdivise chacun des autres cercles équatoriaux 44 45, 46, 47, 49 en deux arcs de cercle, en pratique des demi-cercles, respectivement 44a et 44b, 45a et 45b, 46a et 46b, 47a et 47b, 49a et 49b, dont chacun est situé sur l'un, respectif, desdits hémisphères 2a et 2b sur chacun de ces hémisphères, les arcs de cercles équatoriaux respectivement correspondants se coupent mutuellement d'une part par deux, en des points non référencés correspondant respectivement au sommet de l'angle droit 51 de certaines surfaces élémentaires 50, et d'autre part par trois en des points qui correspondent à ceux des sommets 6 à 12 du cube 4 inscrit dans la sphère 1 qui ne sont pas situés sur le cercle équatorial 48, à savoir les sommets 5 et 9, non visibles à la figure 2, en ce qui concerne l'hémisphère 2a, et les sommets 7 et 11, visibles à la figure 2, en ce qui concerne l'hémisphère 2b ; de façon non visible, au sommet 5 se croisent les arcs de cercles 45a, 46a et 49a et au sommet 9 se croisent les arcs de cercles 44a, 47a et 49a de façon visible, au sommet 7 se croisent les arcs de cercle 44b, 47b et 49b alors qu'au sommet 11 se croisent les arcs de cercles 45b, 46b et 49b.

De préférence, un cercle 63 d'intersection d'un creux avec la face périphérique 2 est disposé respectivement autour de chaque point d'intersection de trois des arcs de cercles précités, c'est-à-dire autour de chacun des sommets 5, 7, 9, 11 du cube inscrit 4, comme on l'a illustré à la figure 2 autour de chacun des sommets 7,11 situés dans l'hémisphère 2b, étant entendu qu'un Homme du métier peut en déduire aisément la disposition de tels cercles autour des sommets 5 et 9 situés dans l'hémisphère 2a ; de préférence, chacun des cercles d'intersection 63 présente un diamètre $D_6$ tel qu'il soit adjacent à six cercles d'intersection 55, dont chacun constitue l'un des cercles d'intersection extrêmes d'une rangée 54 adjacente à l'hypothénuse 52 d'une surface élémentaire 50 respective ; le diamètre $D_6$ peut avantageusement être du même ordre de grandeur que le diamètre $D_1$ lorsqu'on adopte la disposition des cercles d'intersection 55, 57, 59, 61, 62 précédemment décrite, étant entendu que cette disposition de même que le choix des diamètres qui en découle ne constituent que des exemples non limitatifs.

De façon générale, le mode de mise en oeuvre de l'invention qui vient d'être décrit ne constitue qu'un exemple non limitatif, par rapport auquel on pourra prévoir de nombreuses variantes sans pour autant sortir du cadre de la présente invention ; en particulier, certains des cercles d'intersection 63, prévus dans l'exemple préféré précédemment décrits au nombre de 4 situés respectivement à chacun des sommets 5, 7, 9, 11 du cube 4 inscrit dans la sphère 1, ou l'un d'entre eux seulement, pourront être omis et remplacés par exemple par un méplat respectif de marquage de la balle par le fabricant, lequel méplat sera bien visible et par conséquent facile à éviter lors de l'impact. En outre, de façon non représentée, on pourra admettre que les arcs de cercle équatorial 44a, 45a, 46a, 47a, 49a de l'hémisphère 2a soient décalés angulairement d'une même valeur et dans le même sens autour de l'axe 42 du cercle équatorial 48, par rapport aux arcs de cercle équatorial 44b, 45b, 46b, 47b, 49b de l'hémisphère 2b, ce qui n'entraînera pas d'inconvénient majeur et, au contraire, pourra pallier l'absence de cercle d'intersection sur le cercle équatorial 48, comme on l'a indiqué plus haut, en subdivisant chacune des plages de face périphérique subsistant entre les cercles d'intersection au niveau de ce cercle équatorial 48, notamment au niveau des intersections des cercles équatoriaux 44, 45, 46, 47 avec celui-ci, c'est-à-dire autour des sommets 6, 10, 12, 8 du cube inscrit 4 dans le cas de l'exemple illustré.

## Revendications

1. Balle de golf, du type présentant une face périphérique (2, 102) ayant la forme générale d'une sphère (1) et une pluralité de creux aménagés dans ladite face périphérique (2) et définissant par leurs intersections avec celle-ci des cercles d'intersection (55, 57, 59, 61, 62, 63) répartis sur ladite face périphérique (2) selon un motif répétitif déterminé par une subdivision de ladite face périphérique (2) suivant 6 cercles équatoriaux (44 à 49) dont chacun est axé sur un axe passant par les milieux respectifs (25 à 36) de deux arêtes (13 à 24) diamétralement opposées d'un cube (4) inscrit dans la sphère (1), de façon à définir 24 surfaces élémentaires identiques (50) en forme de triangle rectangle isocèle sphérique, à l'intérieur desquelles lesdits cercles d'intersection (55, 57, 59, 61, 62, 63) sont répartis pour l'essentiel, au moins un cercle équatorial déterminé (48), parmi lesdits cercles équatoriaux (44 à 49), ne coupant aucun cercle d'intersection (55, 57, 59, 61, 62, 63) et subdivisant chacun des autres desdits cercles équatoriaux (44 à 49) en deux arcs de cercle équatorial (44a et 44b, 45a et 45b, 46a et 46b, 47a et 47b, 49a et 49b), dont chacun correspond a l'un des deux hémisphères (2a, 2b) définis par ledit cercle équatorial déterminé (48), lesdits arcs de cercles équatoriaux se coupent mutuellement par deux ou trois en des points d'intersection déterminés (5, 7, 9, 11) sur chaque hémisphère (2a, 2b),

caractérisée en ce qu'au moins un cercle d'intersection (63) est disposé autour de l'un, respectif, desdits points (5, 7, 9, 11) d'intersection de trois arcs de cercles équatoriaux (44a et 44b, 45a et 45b, 46a et 46b, 47a et 47b, 49a et 49b).

2. Balle de golf selon la revendication 1, caractérisé en ce qu'un cercle d'intersection (63) est disposé respectivement autour de chacun desdits points (5, 7, 9, 11) d'intersection de trois arcs de cercles équatoriaux (44a et 44b, 45a et 45b, 46a et 46b, 47a et 47b, 49a et 49b).

3. Balle de golf selon l'une quelconque des revendications 1 et 2, caractérisée en ce que des cercles d'intersection (55, 57, 59, 61, 62) sont répartis selon un motif identique dans les surfaces élémentaires (50).

4. Balle de golf selon l'une quelconque des revendications 1 à 3, caractérisée en ce que ledit motif comporte plusieurs rangées (54, 56, 58, 60, 62) mutuellement voisines dont une première (54) est adjacente à l'hypothénuse (52) du triangle rectangle sphérique et dont chacune relie mutuellement les deux côtés (53) de l'angle droit (51) du triangle rectangle sphérique et présente un nombre respectif déterminé de cercles d'intersection (55, 57, 59, 61, 62) de même diamètre ($D_1$, $D_2$, $D_3$, $D_4$, $D_5$) régulièrement répartis, ce nombre déterminé étant pour chaque rangée (56, 58, 60, 62) inférieur d'une unité au nombre déterminé de cercles d'intersection dans la rangée respectivement voisine (54, 56, 58, 60) plus proche de l'hypothénuse (52) et chaque cercle d'intersection (57, 59, 61, 62) de chaque rangée (56, 58, 60, 62) étant adjacent à deux cercles d'intersection (55, 57, 59, 61) de ladite rangée respectivement voisine (54, 56, 58, 60) plus proche de l'hypothénuse (52).

5. Balle de golf selon la revendication 4, caractérisée en ce que les cercles d'intersection (55, 57, 59, 61, 62) respectifs desdites rangées (54, 56, 58, 60, 62) présentent un diamètre ($D_1$, $D_2$, $D_3$, $D_4$, $D_5$) d'autant plus réduit que la rangée (54, 56, 58, 60, 62) à laquelle ils appartiennent est plus éloignée de l'hypothénuse (52) du triangle rectangle sphérique.

6. Balle de golf selon l'une quelconque des revendications 4 et 5, caractérisée en ce que chaque rangée (54, 56, 58, 60) présente deux cercles d'intersection (55, 57, 59, 61) extrêmes adjacents respectivement à l'un et l'autre des côtés (53) de l'angle droit (51) du triangle rectangle sphérique, lesdits cercles d'intersection extrêmes (55, 57, 59, 61) correspondant à un même côté (53) de l'angle droit (51) du triangle rectangle sphérique étant en outre mutuellement adjacents.

7. Balle de golf selon les revendications 5 et 6 en combinaison, caractérisée en ce que ladite première rangée (54) comporte cinq cercles d'intersection (55) mutuellement adjacents, adjacents à l'hypothénuse (52) du triangle rectangle sphérique et dont deux cercles d'intersection extrêmes (55) sont en outre adjacents respectivement à l'un et l'autre des côtés (53) de l'angle droit (51) du triangle rectangle sphérique, et en ce que lesdites rangées (54, 56, 58, 60, 62) comportent en outre :

– une deuxième rangée (56) de quatre cercles d'intersection (57) mutuellement disjoints, dont chacun est adjacent à deux cercles d'intersection (55) de la première rangée (54) et dont deux cercles d'intersection extrêmes (57) sont en outre adjacents respectivement à l'un et l'autre des côtés (53) de l'angle droit (51) du triangle rectangle sphérique,

– une troisième rangée (58) de trois cercles d'intersection (59) mutuellement disjoints, dont chacun est adjacent à deux cercles d'intersection (57) de la deuxième rangée (56) et dont deux cercles d'intersection extrême (59) sont en outre adjacents respectivement à l'un et l'autre des côtés (53) de l'angle droit (51) du triangle rectangle sphérique,

– une quatrième rangée (60) de deux cercles d'intersection (61) mutuellement disjoints, dont chacun est adjacent à deux cercles d'intersection (59) de la troisième rangée (58) et respectivement à l'un et l'autre des côtés (53) de l'angle droit (51) du triangle rectangle sphérique,

– un cercle d'intersection unique (62) adjacent aux deux cercles d'intersection (61) de la quatrième rangée (60) et aux deux côtés (53) de l'angle droit (51).

8. Balle de golf selon l'une quelconque des revendications 6 et 7, caractérisée en ce qu'un cercle d'intersection (63) situé autour d'un point (5, 7, 9, 11) d'intersection de trois arcs de cercles équatoriaux (44a et 44b, 45a et 45b, 46a et 46b, 47a et 47b, 49a et 49b) est adjacent à six cercles d'intersection (55) dont chacun est situé dans l'une, respective, desdites surfaces élémentaires (50) et constitue dans cette surface élémentaire (50) l'un desdits cercles d'intersection (55) extrêmes de ladite première rangée (54) respective.

9. Balle de golf selon l'une quelconque des revendications 1 à 8, caractérisé en ce que les arcs de cercle équatorial (44a, 45a, 46a, 47a, 49a) de l'un (2a) des hémisphères (2a, 2b) sont décalés angulairement, par rapport aux arcs de cercle équatorial respectivement correspondants (44b, 45b, 46b, 47b) de l'autre (2b) des hémisphères (2a, 2b), d'une même valeur autour de l'axe (42) dudit cercle équatorial déterminé (48).

## Patentansprüche

1. Golfball mit einer Umfangsfläche (2, 102), die die allgemeine Form einer Kugel (1) und eine Mehrzahl von Vertiefungen aufweist, die in der genannten Umfangsfläche (2) angeordnet sind und durch ihre Schnittstellen mit dieser Schnittkreise (55, 57, 59, 61, 62, 63) definieren, die auf der genannten Umfangsfläche (2) entsprechend einem Wiederholungsmuster verteilt sind, das durch eine Unterteilung der genannten Umfangsfläche (2) entsprechend 6 Äquatorialkreisen (44 bis 49) bestimmt ist, deren jeder auf eine Achse ausgerichtet ist, die durch die entsprechenden Mitten (25 bis 36) zweier diametral gegenüberliegender Kanten (13 bis 24) eines Würfels (4) verlaufen, der der Kugel (1) eingeschrieben ist, dergestalt, um 24 identische Elementarflächen (50) in Form sphärischer, gleichschenkliger rechteckiger Dreiecke zu definieren, innerhalb deren die genannten Schnittkreise (55, 57, 59, 61, 62, 63) im wesentlichen verteilt sind, wobei unter den genannten Äquatorialkreisen (44 bis 49) zumindest ein bestimmter Äquatorialkreis (48) keinen einzigen der Schnittkreise (55, 57, 59, 61, 62, 63) schneidet und jeden der anderen der genannten Äquatorialkreise (44 bis 49) in zwei äquatoriale Kreisbögen (44a und 44b, 45a und 45b, 46a und 46b, 47a und 47b, 49a und 49b) unterteilt, deren jeder mit einer von beiden Halbkugeln (2a, 2b) korrespondiert, die durch den genannten bestimmten Äquatorialkreis (48) definiert sind, wobei die genannten äquatorialen Kreisbögen sich gegenseitig zu zweit oder zu dritt in bestimmten Schnittpunkten (5, 7, 9, 11) auf jeder Halbkugel (2a, 2b) schneiden,

dadurch gekennzeichnet, daß zumindest ein Schnittkreis (63) um einen betreffenden der genannten Schnittpunkte (5, 7, 9, 11) dreier äquatorialer Kreisbögen (44a, und 44b, 45a und 45b, 46a und 46b, 47a und 47b, 49a und 49b) herum angeordnet ist.

2. Golfball nach Anspruch 1, dadurch gekennzeichnet, daß je ein Schnittkreis (63) um jeden der genannten Schnittpunkte (5, 7, 9, 11) dreier äquatorialer Kreisbögen (44a und 44b, 45a und 45b, 46a und 46b, 47a und 47b, 49a und 49b) herum angeordnet ist.

3. Golfball nach einem der Ansprüche 1 und 2, dadurch gekezeichnet, daß die Schnittkreise (55, 57, 59, 61, 62) nach einem identischen Muster in den Elementarflächen (50) verteilt sind.

4. Golfball nach einem der Ansprüche 1 bis 3, dadurch gekennzeichnet, daß das genannte Muster mehrere zueinander benachbarte Reihen (54, 56, 58, 60, 62) aufweist, von denen eine erste (54) zur Hypothenuse (52) des sphärischen rechteckigen Dreiecks angrenzend ist und deren jede die zwei Seiten (53) des rechten Winkels (51) des sphärischen rechteckigen Dreiecks miteinander verbindet und eine entsprechende bestimmte Anzahl von Schnittkreisen (55, 57, 59, 61, 62) gleichen Durchmessers ($D_1$ $D_2$, $D_3$, $D_4$, $D_5$) aufweist, die regelmäßig verteilt sind, wobei die bestimmte Anzahl bei jeder Reihe (56, 58, 60, 62) um eins geringer ist als die bestimmte Anzahl der Schnittkreise in der entsprechenden, der Hypothenuse (52) näher benachbarten Reihe (54, 56, 58, 60) und jeder Schnittkreis (57, 59, 61, 62) jeder Reihe (56, 58, 60, 62) zu zwei Schnittkreisen (55, 57, 59, 61) der genannten entsprechenden benachbarten Reihe (54, 56, 58, 60) angrenzend ist, die der Hypothenuse (52) näher gelegen ist.

5. Golfball nach Anspruch 4, dadurch gekennzeichnet, daß die entsprechenden Schnittkreise (55, 57, 59, 61, 62) der genannten Reihen (54, 56, 58, 60, 62) einen Durchmesser ($D_1$, $D_2$, $D_3$, $D_4$, $D_5$) aufweisen, der umso kleiner ist, je weiter die Reihe (54, 56, 58, 60, 62), zu der sie gehören, von der Hypothenuse (52) des sphärischen rechteckigen Dreiecks entfernt ist.

6. Golfball nach einem der Ansprüche 4 und 5, dadurch gekennzeichnet, daß jede Reihe (54, 56, 58, 60) zwei äußerste Schnittkreise (55, 57, 59, 61) aufweist, die zur einen oder zur anderen Seite (53) des rechten Winkels (51) des sphärischen rechteckigen Dreiecks angrenzend sind, wobei die genannten äußersten Schnittkreise (55, 57, 59, 61), die mit derselben Seite (53) des rechten Winkels (51) des sphärischen rechteckigen Dreiecks in Verbindung sind, außerdem zueinander angrenzend sind.

7. Golfball nach den Ansprüchen 5 und 6 in Kombination, dadurch gekennzeichnet, daß die genannte erste Reihe (54) fünf Schnittkreise (55) aufweist, die zueinander und zur Hypothenuse (52) des sphärischen rechteckigen Dreiecks angrenzend sind und deren zwei äußerste Schnittkreise (55) außerdem zu der einen bzw. der anderen Seite (53) des rechten Winkels (51) des sphärischen rechteckigen Dreiecks angrenzend sind, und daß die genannten Reihen (54, 56, 58, 60, 62) außerdem aufweisen:

– eine zweite Reihe (56) aus vier voneinander getrennten Schnittkreisen (57), deren jeder zu zwei Schnittkreisen (55) der ersten Reihe (54) angrenzend ist und deren beide äußersten Schnittkreise (57) außerdem zur einen bzw. der anderen Seite (53) des rechten Winkels (51) des sphärischen rechteckigen Dreiecks angrenzend sind,

– eine dritte Reihe (58) mit drei voneinander getrennten Schnittkreisen (59), deren jeder zu zwei Schnittkreisen (57) der zweiten Reihe (56) angrenzend ist und deren beide äußersten Schnittkreise (59) außerdem zur einen bzw. anderen Seite (53) des rechten Winkels (51) des sphärischen rechteckigen Dreiecks angrenzend sind,

– eine vierte Reihe (60) mit zwei voneinander getrennten Schnittkreisen (61), deren jeder zu zwei Schnittkreisen (59) der dritten Reihe (58) und zur einen bzw. anderen Seite (53) des rechten Winkels (51) des sphärischen rechteckigen Dreiecks angrenzend ist,

– einen einzelnen Schnittkreis (62), der zu beiden Schnittkreisen (61) der vierten Reihe (60) und zu beiden Seiten (53) des rechten Winkels (51) angrenzend ist.

8. Golfball nach einem der Ansprüche 6 und 7, dadurch gekennzeichnet, daß ein Schnittkreis (63), der um einen Schnittpunkt (5, 7, 9, 11) dreier äquatorialer Kreisbögen (44a und 44b, 45a und 45b, 46a und 46b, 47a und 47b, 49a und 49b) herum angeordnet ist, zu sechs Schnittkreisen (55) angrenzend ist, deren jeder in einer betreffenden der genannten Elementarflächen (50) gelegen ist und in dieser Elementarfläche (50) einen der genannten äußersten Schnittkreise (55) der genannten, entsprechenden ersten Reihe (54) bildet.

9. Golfball nach einem der Ansprüche 1 bis 8, dadurch gekennzeichnet, daß die äquatorialen Kreisbögen (44a, 45a, 46a, 47a, 49a) der einen (2a) der Halbkugeln (2a, 2b) winkelmäßig relativ zu den entsprechenden korrespondierenden äquatorialen Kreisbögen (44b, 45b, 46b, 47b) der anderen (2b) der Halbkugeln (2a, 2b) um den gleichen Wert um die Achse (42) des genannten bestimmten Äquatorialkreises (48) herum versetzt sind.

**Claims**

1. A golf ball of the type having a peripheral surface ( 2, 102 ) having the general shape of a sphere (1) and a plurality of dimples arranged in the said peripheral surface (2) and defining by their intersections with this intersection circles (55,57,59,61,62,63) distributed on the said peripheral surface (2) in accordance with a repetitive motif determined by subdivision of the said peripheral surface (2) along 6 equatorial circles (44 to 49) of which each is centred on an axis passing through the respective midpoints (25 to 36) of 2 diametrically opposed edges (13 to 24) of a cube (4) inscribed in the sphere (1), in a manner to define 24 elemental surfaces (50) in sperical isosceles right-angle triangle form, inside which the said intersection circles (55,57,59,61,62,63) are essentially distributed, at least one determined equatorial circle (48), amongs the said equatorial circles (44 to 49), cutting none of the intersection circles (55,57,59,61,62,63) and subdivising each of the other said equatorial circles (44 to 49) into two equatorial circular arcs (44a and 44b, 45a and 45b, 46a and 46b, 47a and 47b, 49a and 49b), of which each corresponds to one of the two hemispheres (2a,2b) defined by the said determined equatorial circle (48), the said equatorial circular arcs mutually cutting each other in pairs or threes at determined points of intersection (5,7,9,11) on each hemisphere (2a,2b), characterised in that at least one intersection circle (63) is arranged about a respective one of the points (5,7,9,11) of intersection of 3 equatorial circular arcs (44a and 44b, 45a and 45b, 46a and 46b, 47a and 47b, 49a and 49b).

2. A golf ball according to claim 1, characterised in that an intersection circle (63) is arranged respectively about each of the said points (5,7,9,11) of intersection of 3 equatorial circular arcs (44a and 44b, 45a and 45b, 46a and 46b, 47a and 47b, 49a and 49b).

3. A golf ball according to claim 1 or claim 2, characterised in that the intersection circles (55,57,59, 61,62) are distributed in accordance with an identical motif in the elemental surfaces (50).

4. A golf ball according to any one of claims 1 to 3, characterised in that the said motif has a plurality of mutually neighbouring rows (54,56,58,60,62) of which a first (54) is adjacent to the hypothenuse (52) of the spherical right-angle triangle and of which each mutually connects the two edges (53) of the right angle (51) of the spherical right-angle triangel and has a respective determined number of regularly distributed intersection circles (55,57,59, 61,62) of the same diameter ($D_1$, $D_2$, $D_3$, $D_4$, $D_5$), this determined number being for each row (56,58,60,61) one unit less than the determined number of intersection circles in the respectively neighbouring row (54,56,58,60) nearer to the hypothenuse (52) and each intersection circle (57,59,61,62) of each row (56,58,60,62) being adjacent to two intersection circles (55,57,59,61) of the said respectively neighbouring row (54,56,58,60) nearer the hypothenuse (52).

5. A golf according to claim 4, characterised in that the respective intersection circles (55,57,59,61, 62) of the said rows (54,56,58,60,62) have a diameter ($D_1$, $D_2$, $D_3$, $D_4$, $D_5$) reducing as the row (54,56,58,60, 62) to which they belong is further from the hypothenuse (52) of the spherical right-angle triangle.

6. A golf ball according to claim 4 or claim 5, characterised in that each row (54,56,58,60) has two end intersection circles respectively adjacent to one and the other of the sides (53) of the right angle (51) of the sperical right-angle triangle, the said end intersection circles (55,57,59,61) corresponding to the same side (53) of the right angle (51) of the sperical right-angle triangle being in addition mutually adjacent.

7. A golf ball according to claims 5 and 6 in combination, characterised in that the said first row (54) has 5 mutually adjacent intersection circles (55) adjacent to the hypothenuse (52) of the spherical right-angle triangle and of which two end intersection circles (55) are also respectively adjacent to one and the other of the edges (53) of the right angle (51) of the sperical right-angle triangle, and in that the said rows (54,56,58,60,62) further comprise:-

   – a second row (56) of 4 mutually disjoint intersection circles (57), of which each is adjacent to two intersection circles (55) of the first row (54) and of which two end intersection circles (57) are also respectively adjacent to the one and the other of the sides (53) of the right angle (51) of the spherical right-angle triangle,

   – a third row (58) of 3 mutually disjoint intersection circles (59), of which each is adjacent to two intersection circles (57) of the second row (56) and of which two end intersection circles (59) are further adjacent respectively to the one and the other of the sides (53) of the right angle (51) of the sperical right-angle triangle,

   – a fourth row (60) of 2 mutually disjoint intersection circles (61) of which each is adjacent to two intersection circles (59) of the third row and respectively to the one and the other of the sides (53) of the right angle (51) of the spherical right-angle triangle,

   – a single intersection circle (62) adjacent to two intersection circles (61) of the fourth row (60) and to the two sides (53) of the right angle (51).

8. A golf ball according to claim 6 or claim 7, characterised in that one intersection circle (63) situated about a point (5,7,9,11) of intersection of 3 equatorial circles (44a and 44b, 45a and 45b, 46a and 46b, 47a and 47b, 49a and 49b) is adjacent to 6 intersection circles (55) of which each is situated in a respective one of the said elemental surfaces (50) and constitutes in this elemental surface (50) one of the end intersection circles (55) of the said respective first row (54).

9. A golf ball according to any one of claims 1 to 8, characterised in that the equatorial circular arcs (44a, 45a, 46a, 47a, 49a) of one (2a) of the hemispheres are angularly displaced, with respect to the respectively corresponding equatorial circular arcs (44b, 45b, 46b, 47b, 49b) of the other (2b) of the hemispheres (2a, 2b), by the same amount about the axis (42) of the said determined equatorial circular arc (48).

FIG.1

FIG.2